# NEUE EUROPÄISCHE PATENTSCHRIFT

(11) **EP 2 910 476 B2**
(45) Veröffentlichungstag und Bekanntmachung des Hinweises auf die Entscheidung über den Einspruch: **27.09.2023**
(45) Hinweis auf die Patenterteilung: 28.06.2017
(21) Anmeldenummer: 15000291.3
(22) Anmeldetag: 30.01.2015
(51) Int. Cl.: B65B 25/06, B65B 35/30, B65B 35/44, B65B 35/54, B65G 47/08, B65G 15/24

(54) **Verfahren zur Produktformatierung von Lebensmittelprodukten auf einer Fördereinrichtung**
Process for product formatting of food products on a conveyor
Procédé de mise en forme de produits alimentaires sur un convoyeur

(30) Priorität: 24.02.2014 DE 102014002530
(43) Veröffentlichungstag der Anmeldung: 26.08.2015
(73) Patentinhaber: Provisur Technologies, Inc., Mokena, IL 60448 (US)
(72) Erfinder: Bialy, Jürgen, 48341 Altenberge (DE)
(74) Vertreter: v. Bezold & Partner Patentanwälte - PartG mbB

(56) Entgegenhaltungen:
- EP-A1- 2 420 460
- EP-A1- 2 789 538
- DE-A1-102012 210 703
- US-A1- 2012 042 757

## Beschreibung

Die Erfindung betrifft eine Fördereinrichtung zur Förderung von Lebensmittelprodukten in mehreren parallelen Förderspuren und zur Formatierung der Lebensmittelprodukte in einem bestimmten Produktformat, insbesondere zur Förderung und Formatierung von Stapeln oder Schindeln aus mehreren Scheiben von Käse oder Fleischwaren.

Aus EP 2 420 363 A1 ist eine Schneidvorrichtung ("Slicer") bekannt, die es ermöglicht, Lebensmittelprodukte (z.B. Salami, Schinken, Käse) in Scheiben zu schneiden, wobei die Schneidvorrichtung die zu schneidenden Lebensmittelprodukte in mehreren parallelen Förderspuren durch die Schneideinrichtung fördert, schneidet und ausgangsseitig ausgibt. Die Fördergeschwindigkeit und damit der Vorschub der einzelnen Lebensmittelprodukte kann hierbei getrennt für die einzelnen Förderspuren eingestellt werden.

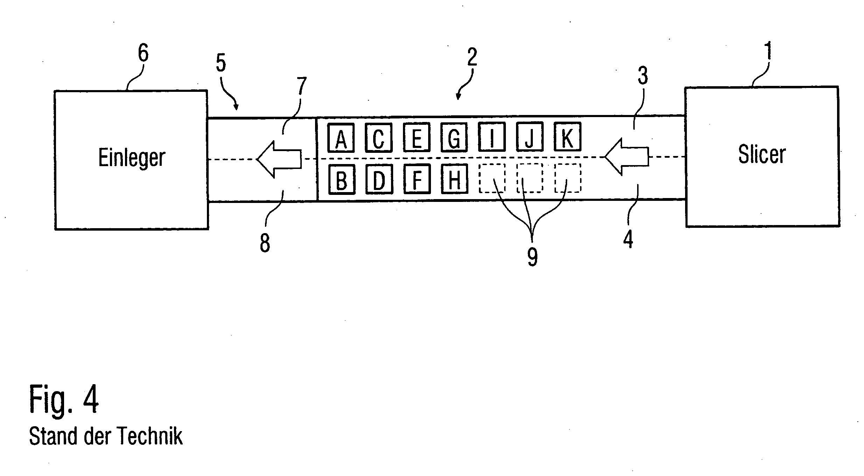

Figur 4 zeigt eine Aufsicht auf eine herkömmliche Bearbeitungslinie mit einer derartigen Schneideinrichtung 1 mit einem Ausgangs-Förderer 2 mit zwei parallelen Förderspuren 3, 4. Der Ausgangs-Förderer 2 der Schneideinrichtung 1 ist ausgangsseitig mit einem Eingangs-Förderer 5 eines Einlegers 6 verbunden, wobei der Eingangs-Förderer 5 des Einlegers 6 ebenfalls zwei parallele Förderspuren 7, 8 aufweist. Der Einleger 6 hat die Aufgabe, die eingangsseitig aufgenommenen geschnittenen Lebensmittelprodukte A-K in Verpackungen einzulegen. Der konstruktive Aufbau und die Funktionsweise des Einlegers 6 ist an sich aus dem Stand der Technik bekannt und muss deshalb nicht näher beschrieben werden.

Während eines Schneidvorgangs gibt die Schneideinrichtung 1 auf dem Ausgangs-Förderer 2 zunächst jeweils Paare A-B, C-D, E-F und G-H der Lebensmittelprodukte A-K aus, so dass zunächst die beiden Förderspuren 3, 4 mit zwei nebeneinander liegenden Lebensmittelprodukten belegt sind. Dieses Produktformat mit zwei nebeneinander liegenden Lebensmittelprodukten kann der Einleger 6 ohne Weiteres verarbeiten.

Bei einem Schneidvorgang treten jedoch üblicherweise Produktlücken 9 in einer der beiden Förderspuren 3, 4 der Schneideinrichtung 1 auf.

Eine mögliche Ursache für die Produktlücken 9 besteht darin, dass das zu schneidende Lebensmittelprodukt in der Förderspur 4 vor dem Aufschneiden kürzer war als das zu schneidende Lebensmittelprodukt in der Förderspur 3, so dass das Lebensmittelprodukt in der Förderspur 4 früher aufgeschnitten ist als das Lebensmittelprodukt in der Förderspur 3, was dann zu den Produktlücken 9 führt. Diese Ursache für die Produktlücken 9 ist beispielsweise dann relevant, wenn es sich um Naturprodukte (z.B. Schinken) handelt, die keine definierte Länge haben, sondern hinsichtlich ihrer Länge natürlichen Schwankungen unterliegen.

Eine andere mögliche Ursache für die Produktlücken 9 besteht darin, dass die Schneideinrichtung 1 die Lebensmittelprodukte in den beiden Förderspuren 3, 4 mit einer unterschiedlichen Scheibendicke schneidet.

Eine weitere mögliche Ursache für die Produktlücken 9 besteht darin, dass die Portionsgrößen der Lebensmittelprodukte A-K bzw. B-H in den beiden Förderspuren 3 bzw. 4 unterschiedlich groß sind. Falls es sich bei den Lebensmittelprodukten B-H in der linken Förderspur 4 beispielsweise um Stapel von Fleischscheiben mit einem Gesamtgewicht von jeweils 200 Gramm handelt, so ist das betreffende Lebensmittelprodukt früher aufgeschnitten als in der rechten Förderspur 3, wenn die einzelnen Lebensmittelprodukte A-K dort Stapel von Scheiben mit einem Gesamtgewicht von jeweils 100 Gramm sind.

Unabhängig von den verschiedenen möglichen Ursachen der Produktlücken 9 entspricht das Produktformat am Eingang des Einlegers 6 dann nicht mehr den Anforderungen des Einlegers 6, da dieser erwartet, dass die beiden Förderspuren 7, 8 des Eingangsförderers 5 des Einlegers 6 beide mit Lebensmittelprodukten belegt sind. Eine Produktlücke in einer der beiden Förderspuren 7, 8 am Eingang des Einlegers 6 kann dagegen zu Problemen führen.

Weiterhin ist aus DE 10 2012 210 703 A1 eine Fördereinrichtung zur Förderung von Lebensmittelprodukten bekannt. Hierbei werden Stapel von Lebensmittelscheiben in parallelen Förderspuren gefördert. Falls in einem der Stapel eine Scheibe fehlt, so wird die fehlende Scheibe aus einem Puffer entnommen und ergänzt. Dies hat den Vorteil, dass die ausgangsseitig abgegebenen Scheibenstapel stets die gewünschte Anzahl von Scheiben aufweisen. Allerdings können hierbei vollständig fehlende Scheibenstapel nicht aufgefüllt werden, sondern lediglich einzelne Scheiben.

Ferner ist zum Stand der Technik hinzuweisen auf DE 10 2012 003 500 A1.

Schließlich offenbart EP 2 420 460 A1 eine Fördereinrichtung, bei der unvollständige Produktformate mit einer Produktlücke aus den eingangsseitig einlaufenden Förderspuren in einer Nebenförderstrecke ausgeschleust werden. In der Nebenförderstrecke werden die Produkte der unvollständigen Produktformate dann verwendet, um vollständige Produktformate neu zusammenzustellen. Diese Fördereinrichtung benötigt jedoch eine komplette Nebenförderstrecke, die eingangsseitig und ausgangsseitig mit der Hauptförderstrecke zusammengeführt werden muss, was relativ aufwändig ist.

Der Erfindung liegt deshalb die Aufgabe zugrunde, derartige Produktlücken zu vermeiden, wenn Lebensmittelprodukte in mehreren parallelen Förderspuren mit getrennt einstellbaren Fördergeschwindigkeiten geschnitten werden.

Diese Aufgabe wird durch eine erfindungsgemäße Fördereinrichtung und ein entsprechendes Verfahren gemäß den unabhängigen Ansprüchen gelöst.

Die Erfindung umfasst die allgemeine technische Lehre, etwaige Produktlücken in einer der Förderspuren am Ausgang einer Schneideinrichtung mit Lebensmittelprodukten aufzufüllen, damit nach Möglichkeit immer beide Förderspuren am Ausgang der Schneideinrichtung mit Lebensmittelprodukten belegt sind.

Der im Rahmen der Erfindung verwendete Begriff einer Produktlücke bedeutet, dass an der entsprechend dem Produktformat vorgesehenen Stelle überhaupt kein Lebensmittelprodukt vorhanden ist. Falls es sich bei den Lebensmittelprodukten also um Stapel von Fleisch- oder Käsescheiben handeln sollte, so bedeutet eine Produktlücke, dass an der betreffenden Stelle überhaupt kein Stapel vorhanden ist, so dass die Produktlücke mit einem Stapel aufgefüllt werden kann. Davon zu unterscheiden sind beispielsweise Unvollständigkeiten in einem Lebensmittelprodukt. Falls es sich bei den Lebensmittelprodukten beispielsweise um Stapel von Fleisch- oder Käsescheiben handeln sollte, so kann eine solche Unvollständigkeit darin bestehen, dass ein Stapel nicht die wunschgemäß vorgegebene Anzahl von Scheiben enthält. Falls ein Stapel beispielsweise zehn Scheiben enthalten soll, aber tatsächlich nur neun Scheiben umfasst, so hat der betreffende Stapel eine Scheibe zu wenig. Diese Unvollständigkeit des Stapels kann dann aufgefüllt werden, indem eine zusätzliche Scheibe auf den Stapel aufgebracht wird, wie es aus DE 10 2012 210 703 A1 an sich bekannt ist. Der im Rahmen der Erfindung verwendete Begriff einer Produktlücke ist also
in dem vorstehend beschriebenen engeren Sinne zu verstehen, wonach an der betreffenden Stelle des vorgegebenen Produktformats ein Lebensmittelprodukt (z. B. Stapel) vollständig fehlt. Der im Rahmen der Erfindung verwendete Begriff einer Produktlücke umfasst also nicht Unvollständigkeiten (z. B. fehlende Scheiben in einem Scheibenstapel) von Lebensmittelprodukten.

Bei den Lebensmittelprodukten kann es sich beispielsweise um Scheiben von Wurst, Schinken, Salami oder Käse handeln, jedoch ist die Erfindung nicht auf diese Lebensmittelprodukte beschränkt, sondern grundsätzlich auch mit anderen Lebensmittelprodukten realisierbar.

Weiterhin ist zu erwähnen, dass die Schneideinrichtung die Lebensmittelprodukte beispielsweise als Stapel oder Schindeln aus mehreren Scheiben bereitstellen kann. Die Erfindung ist jedoch hinsichtlich der von der Schneideinrichtung gelieferten Produktpräsentation nicht auf Stapel oder Schindeln beschränkt, sondern auch mit anderen Produktpräsentationen realisierbar. Beispielsweise können die einzelnen Scheiben auch rund oder oval gelegt sein. Weiterhin besteht im Rahmen der Erfindung die Möglichkeit, dass die einzelnen Scheiben versetzt oder mit einer Uberlappung ("Interleave") geschindelt sind. Ferner besteht auch die Möglichkeit, dass die einzelnen Scheiben gefaltet sind. Derartige Produktpräsentationen sind an sich aus dem Stand der Technik bekannt und müssen deshalb nicht näher beschrieben werden.

Die erfindungsgemäße Fördereinrichtung sorgt nun dafür, dass etwaige Produktflücken auf einer der parallelen Förderspuren mit einem Lebensmittelprodukt aufgefüllt werden, so dass ausgangsseitig alle parallelen Förderspuren mit den Lebensmittelprodukten belegt sind. Die erfindungsgemäße Fördereinrichtung stellt also ausgangsseitig ein Produktformat bereit, das aus mehreren parallelen Lebensmittelprodukten (z.B. Scheibenstapel) besteht. Dies ist vorteilhaft, weil ein derartiges Produktformat für einen nachgeordneten Einleger zur Produktverpackung wichtig ist.

Bei einer geradzahligen Anzahl von Produktlücken in einer der Förderspuren kann die Produktlücke ohne Weiteres mit einem überzähligen Lebensmittelprodukt aus der anderen Förderspur aufgefüllt werden. Falls beispielsweise die rechte Förderspur acht Lebensmittelprodukte (z.B. Scheibenstapel) enthält, während die linke Förderspur nur sechs Lebensmittelprodukte (z.B. Scheibenstapel) enthält, so kann ein Lebensmittelprodukt aus der rechten Förderspur in die linke Förderspur überführt werden, so dass dann beide Förderspuren jeweils 7 Lebensmittelprodukte hintereinander enthalten. Im Ergebnis sind dann also am Ausgang der erfindungsgemäßen Fördereinrichtung alle Förderspuren mit Lebensmittelprodukten belegt.

Bei einer ungradzahligen Anzahl von Produktlücken in einer der Förderspuren reicht diese Art der Auffüllung der Produktflücken jedoch nicht aus, um sicherzustellen, dass am Ausgang der Fördereinrichtung alle Förderspuren mit Lebensmittelprodukten belegt sind. Falls beispielsweise die rechte Förderspur acht Lebensmittelprodukte (z.B. Scheibenstapel) enthält, während die linke Förderspur nur fünf Lebensmittelprodukte (z.B. Scheibenstapel) enthält, so kann eine der drei Produktlücken der linken Förderspur mit einem Lebensmittelprodukt aus der rechten Förderspur aufgefüllt werden. Im Ergebnis enthält die rechte Förderspur dann noch sieben Lebensmittelprodukte hintereinander, während die linke Förderspur nur sechs Lebensmittelprodukte enthält und damit immer noch eine Produktlücke aufweist. Für derartige Fälle weist die erfindungsgemäße Fördereinrichtung vorzugsweise einen Produktpuffer auf, der mindestens ein Lebensmittelprodukt enthält, so dass die verbleibende Produktlücke in der linken Förderspur dann mit einem der Lebensmittelprodukte in dem Produktpuffer aufgefüllt werden kann.

Die Produktlücken in einer der Förderspuren werden also vorrangig zunächst aus der anderen Förderspur mit Lebensmittelprodukten aufgefüllt sofern dies möglich ist. Vorzugsweise werden die in dem Produktpuffer bereitgehaltenen Lebensmittelprodukte nur dann zum Auffülen von Produktflücken verwendet, wenn dies erforderlich sein sollte, weil die Anzahl der Produktflücken in einer der Förderspuren ungradzahlig ist.

In einem bevorzugten Ausführungsbeispiel der Erfindung weist die Fördereinrichtung einen Verteiler-Förderer auf, der die eingangsseitig einlaufenden Lebensmittelprodukte wahlweise auf einen Hauptstrom oder auf den Produktpuffer verteilt.

Der Produktpuffer wird hierbei durch einen Puffer-Förderer gebildet, der von dem Verteiler-Förderer mit den Lebensmittelprodukten beschickt wird. Vorzugsweise leitet der Verteiler-Förderer die eingangsseitig einlaufenden Lebensmittelprodukte jeweils so lange auf den Puffer-Förderer, bis der Puffer-Förderer gefüllt ist. Dies ist vorteilhaft, weil sich dann auf dem Puffer-Förderer stets genügend Lebensmittelprodukte zum Auffüllen von Produktflücken in einer der Förderspuren befinden. Bei einem vollständig oder ausreichend gefüllten Puffer-Förderer leitet der Verteiler-Förderer die eingangsseitig einlaufenden Lebensmittelprodukte dagegen vorzugsweise in den Hauptstrom zu einem nachgeordneten Hauptstrom-Förderer. Bei dem bevorzugten Ausführungsbeispiel kann der Hauptstrom-Förderer jedoch nicht nur von dem Verteiler-Förderer mit den Lebensmittelprodukten beschickt werden, sondern auch von dem Puffer-Förderer, falls dies zur Auffüllung von Produktflücken erforderlich sein sollte.

Darüber hinaus weist die erfindungsgemäße Fördereinrichtung eine Transfer-Einrichtung auf, die Lebensmittelprodukte zwischen den parallelen Förderspuren transferieren kann, um Produktflücken aufzufüllen.

In dem bevorzugten Ausführungsbeispiel handelt es sich bei der Transfer-Einrichtung um einen sogenannten Shuttle-Förderer, der als Ganzes quer zur Förderrichtung verschiebbar ist, um die eingangsseitig an dem Shuttle-Förderer einlaufenden Lebensmittelprodukte zwischen den Förderspuren zu verschieben. Der Shuttle-Förderer weist deshalb in der Regel eine größere Förderbreite auf als die sonstigen Bestandteile der Fördereinrichtung, damit der Shuttle-Förderer unabhängig von seiner Verschiebestellung quer zur Förderrichtung stets die gesamte Breite des sonstigen Förderbandes abdeckt.

Es ist jedoch alternativ auch möglich, dass als Transfer-Einrichtung ein Transfer-Roboter eingesetzt wird, der ein Lebensmittelprodukt von dem Förderband aufnehmen und in einer anderen Förderspur wieder absetzen kann. Derartige Transfer-Roboter sind an sich aus dem Stand der Technik bekannt und müssen deshalb nicht näher beschrieben werden.

Es wurde bereits vorstehend erwähnt, dass der Verteiler-Förderer die eingangsseitig einlaufenden Lebensmittelprodukte (z.B. Scheibenstapel) wahlweise zu dem Puffer-Förderer oder zu dem Hauptstrom-Förderer leiten kann. Diese Verteilung erfolgt vorzugsweise durch eine vertikale Schwenkbewegung des Verteiler-Förderers, was einen schnellen Wechsel ermöglicht. Der Verteiler-Förderer ist deshalb vorzugsweise mit seinem Ausgangsende vertikal verstellbar zwischen dem Puffer-Förderer und dem Hauptstrom-Förderer, um wahlweise den Puffer-Förderer oder den Hauptstrom-Förderer mit den eingangsseitig einlaufenden Lebensmittelprodukten zu beschicken.

Der Puffer-Förderer befindet sich vorzugsweise über dem Hauptstrom-Förderer und ist mit seinem Ausgangsende ebenfalls vertikal verstellbar.

Falls eine Produktlücke mit einem Lebensmittelprodukt aus dem Puffer-Förderer aufgefüllt werden muss, so kann der Puffer-Förderer mit seinem Ausgangsende auf den Hauptstrom-Förderer abgesenkt werden, um eines der Lebensmittelprodukte aus dem Puffer-Förderer zur anschließenden Auffüllung einer Produktlücke auf dem Hauptstrom-Förderer abzulegen.

Falls dagegen keine Produktlücke aufgefüllt werden muss, so wird der Puffer-Förderer mit seinem Ausgangsende von dem Hauptstrom-Förderer angehoben, so dass der Hauptstrom der Lebensmittelprodukte dann ungestört von dem Puffer-Förderer auf dem Hauptstrom-Förderer gefördert werden kann.

In dem bevorzugten Ausführungsbeispiel der Erfindung ist die Fördergeschwindigkeit der einzelnen Förderspuren bei dem Puffer-Förderer getrennt voneinander einstellbar. Dies ist wichtig, damit ein einzelnes Lebensmittelprodukt aus nur einer der Förderspuren des Puffer-Förderers auf den Hauptstrom-Förderer übertragen werden kann. Hierzu wird dann eine Förderspur des Puffer-Förderers aktiviert und fördert dann das Lebensmittelprodukt heraus, während die anderen Förderspuren des Puffer-Förderers stillstehen.

Darüber hinaus ist vorzugsweise ein Übemahme-Förderer mit mehreren parallelen Förderspuren vorgesehen, wobei der Übernahme-Förderer in der Förderrichtung hinter der Transfer-Einrichtung (z.B. Shuttle-Förderer, Transfer-Roboter) angeordnet ist und von der Transfer-Einrichtung mit den Lebensmittelprodukten beschickt wird. Wichtig ist hierbei, dass auch bei dem Übernahme-Förderer die Fördergeschwindigkeit der einzelnen Förderspuren getrennt voneinander einstellbar ist, um nur ein einzelnes Lebensmittelprodukt in nur einer der Förderspuren zu übernehmen.

Zur Vermeidung von Missverständnissen wird darauf hingewiesen, dass der im Rahmen der Erfindung verwendete Begriff einer Förderspur bedeutet, dass die Förderspur hinreichend breit ist, um jeweils ein Lebensmittelprodukt aufzunehmen. Bei einem Förderer mit drei parallelen Förderspuren können also nebeneinander drei Lebensmittelprodukte gefördert werden. Der Begriff einer Förderspur impliziert dagegen in der Regel nicht, dass die Fördergeschwindigkeit der Förderspur individuell einstellbar ist. Es ist also im Rahmen der Erfindung zu unterscheiden zwischen Förderern mit mehreren Förderspuren mit einer einheitlichen Fördergeschwindigkeit einerseits und Förderern mit mehreren Förderspuren mit jeweils getrennt einstellbaren Fördergeschwindigkeiten andererseits. Bei dem Puffer-Förderer und bei dem Übernahme-Förderer sind die Fördergeschwindigkeiten der einzelnen Förderspuren vorzugsweise getrennt einstellbar. Bei den anderen Förderern weisen die einzelnen Förderspuren dagegen vorzugsweise eine einheitliche Fördergeschwindigkeit auf.

Zu dem Übernahme-Förderer ist noch zu erwähnen, dass dieser auch in einem nachfolgenden Gerät angeordnet sein kann, wie beispielsweise in einem Einleger, wie noch detailliert beschrieben wird.

Ferner ist zu erwähnen, dass die erfindungsgemäße Fördereinrichtung vorzugsweise mindestens einen Produktsensor aufweist, der am Eingang der Fördereinrichtung die Produktbelegung in den einzelnen Förderspuren individuell für jede der Förderspuren erfasst. Derartige Produktsensoren können beispielsweise mittels einer Kamera, eines Ultraschallsensors oder durch mechanische Abtastung funktionieren, jedoch ist die Erfindung nicht auf diese Funktionsprinzipien des Produktsensors beschränkt.

Weiterhin enthält die erfindungsgemäße Fördereinrichtung vorzugsweise eine Steuereinheit, die eingangsseitig mit den Produktsensoren verbunden ist, um die Belegung der Förderspuren am Eingang der Fördereinrichtung zu erfassen. Darüber hinaus steuert die Steuereinheit ausgangsseitig folgende Aktionen der Fördereinrichtung:
- Die Schwenkbewegung des Verteiler-Förderers,
- die Schwenkbewegung des Puffer-Förderers,
- die Fördergeschwindigkeit der einzelnen Förderspuren des Puffer-Förderers,
- die Querverschiebung des Shuttle-Förderers oder die Transferbewegung des Transfer-Roboters,
- die Fördergeschwindigkeit der einzelnen Förderspuren des Übernahme-Förderers,
- die Fördergeschwindigkeit des Hauptstrom-Förderers, sowie
- die Fördergeschwindigkeit des Verteiler-Förderers.

Die Steuerung der vorstehend genannten Aktionen erfolgt hierbei so, dass am Ausgang möglichst alle Produktlücken in den Förderspuren aufgefüllt sind.

Schließlich umfasst die Erfindung auch ein entsprechendes Verfahren zur Produktformatierung von Lebensmittelprodukten auf einer Fördereinrichtung, wobei die einzelnen Verfahrensschritte bereits aus der vorstehenden Beschreibung hervorgehen, so dass auf eine separate Beschreibung der einzelnen Verfahrensschritte hier verzichtet wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine Perspektivansicht einer erfindungsgemäßen Fördereinrichtung,
- Figur 1B: eine Seitenansicht der Fördereinrichtung aus Figur 1A,
- Figur 1C: eine vergrößerte Detailansicht aus Figur 1B im Eingangsbereich der Fördereinrichtung,
- Figur 1D: eine vergrößerte Detailansicht aus Figur 1B im mittleren Bereich der Fördereinrichtung,
- Figur 1E: eine Aufsicht auf die Fördereinrichtung gemäß den Figuren 1A-1D,
- Figur 1F: eine Frontansicht der Fördereinrichtung gemäß den Figuren 1A-1E von der Ausgangsseite aus,
- Figur 2: eine erfindungsgemäße Bearbeitungslinie zur Bearbeitung von Lebensmittelprodukten,
- Figuren 3A-3P: schematisierte Aufsichtsdarstellungen von aufeinander folgenden Zuständen der Fördereinrichtung sowie
- Figur 4: eine schematisierte Aufsicht auf eine herkömmliche Bearbeitungslinie mit einer Schneideinrichtung und einem Einleger.

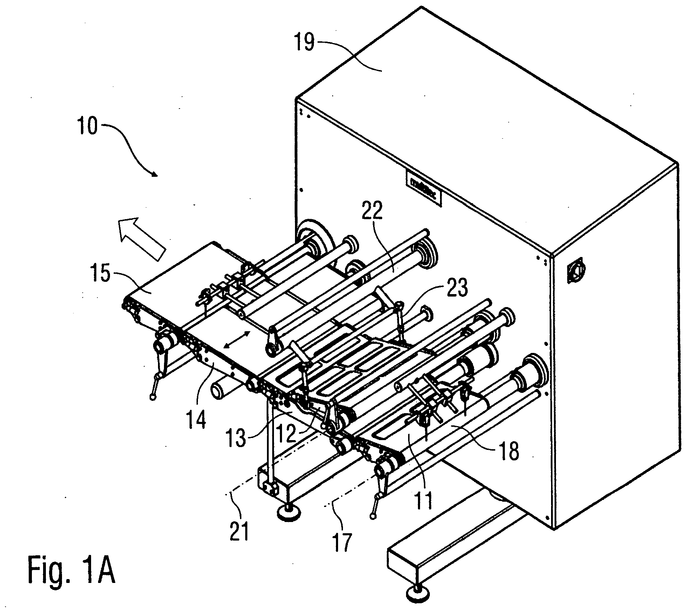

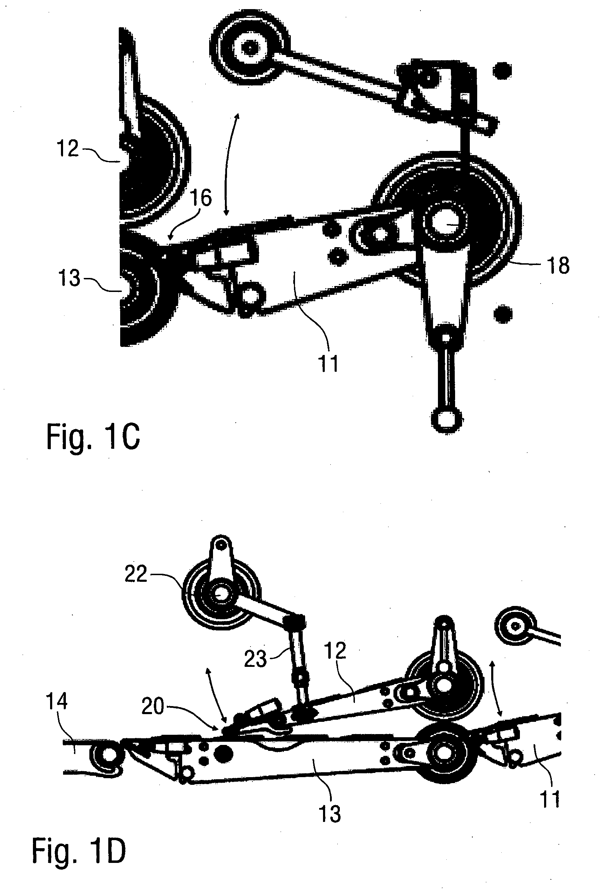

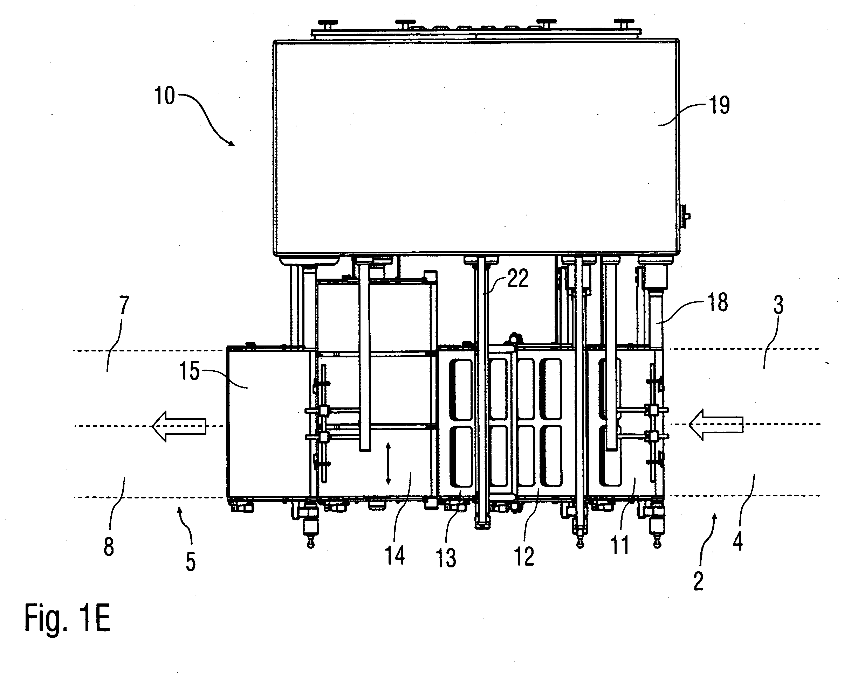

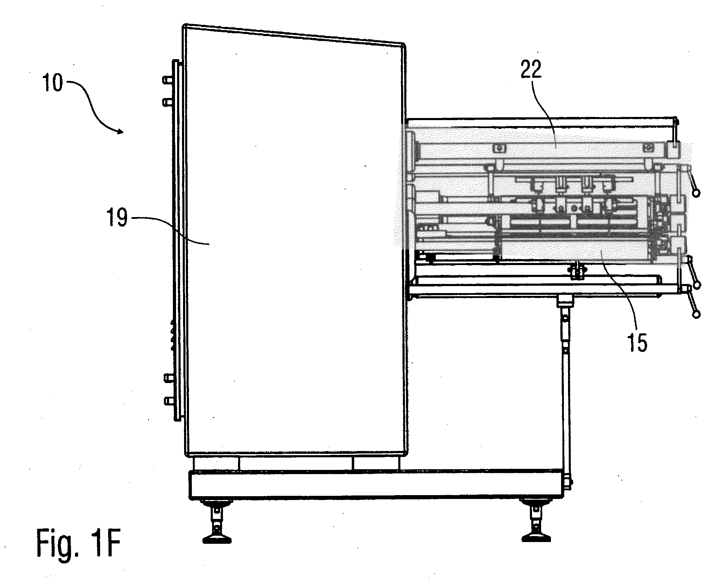

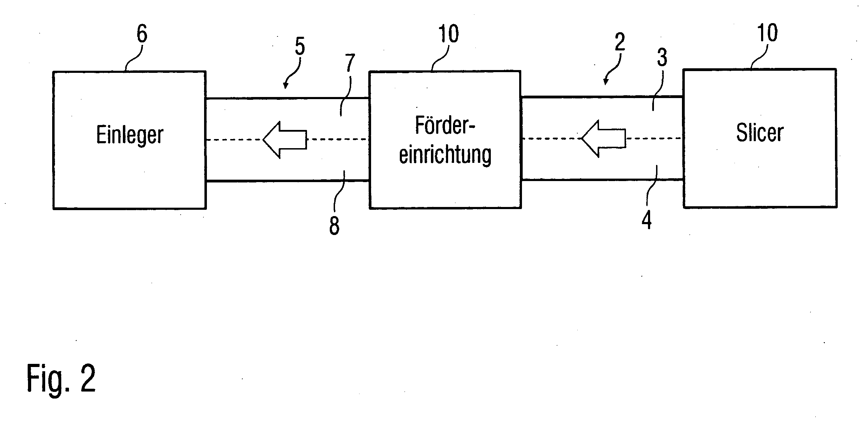

Die Figuren 1A bis 1F zeigen verschiedene Ansichten einer erfindungsgemäßen Fördereinrichtung 10 zum Fördern von Lebensmittelprodukten (z.B. Stapel von Wurstscheiben) von der Schneideinrichtung 1 zu dem Einleger 6, wie in Figur 2 dargestellt ist. Hierbei hat die Fördereinrichtung 10 die Aufgabe, etwaige Produktlücken in einer der Förderspuren 3, 4 des Ausgangs-Förderers 2 der Schneideinrichtung 1 aufzufüllen, damit die beiden Förderspuren 7, 8 des Eingangs-Förderers 5 des Einlegers 6 stets alle mit Lebensmittelprodukten belegt sind. Dies ist wichtig, weil der Einleger 6 für eine ordnungsgemäße Funktion ein Produktformat erwartet, in dem alle Förderspuren 7, 8 des Eingangs-Förderers 5 mit Lebensmittelprodukten belegt sind.

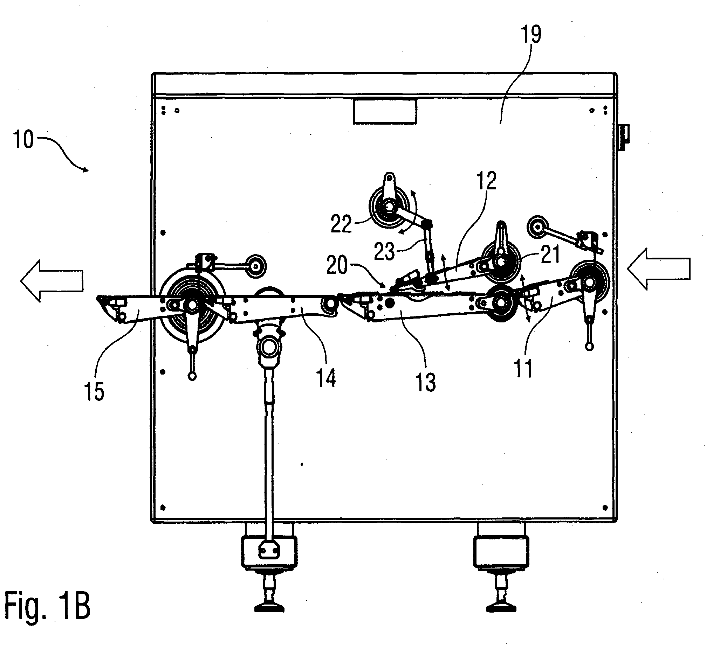

Die erfindungsgemäße Fördereinrichtung umfasst mehrere Förderer mit unterschiedlichen Funktionen, nämlich einen Verteiler-Förderer 11, einen Puffer-Förderer 12, einen Hauptstrom-Förderer 13, einen Shuttle-Förderer 14 und einen Ausgangs-Förderer 15, wobei die Lebensmittelprodukte in Richtung der in Figur 1B gezeigten Blockpfeile durch die Fördereinrichtung 10 gefördert werden.

Der Verteiler-Förderer 11 übernimmt die eingangsseitig einlaufenden Lebensmittelprodukte von dem Ausgangs-Förderer 2 der Schneideinrichtung 1 und leitet die einlaufenden Lebensmittelprodukte wahlweise an den Puffer-Förderer 12 oder an den Hauptstrom-Förderer 13 weiter. Hierzu ist der Verteiler-Förderer 11 mit seinem Ausgangsende 16 vertikal schwenkbar zwischen dem oben liegenden Puffer-Förderer 12 und dem unten liegenden Hauptstrom-Förderer 13. Der Verteiler-Förderer 11 kann also um eine Schwenkachse 17 in Richtung des Doppelpfeils geschwenkt werden. Die Schwenkbewegung des Verteiler-Förderers 17 wird durch eine Antriebswelle 18 angetrieben, die seitlich aus einem Gehäuse 19 der Fördereinrichtung 10 herausragt und beispielsweise von einem Elektromotor angetrieben werden kann.

Darüber hinaus weist die Fördereinrichtung 10 eingangsseitig noch mehrere Produktsensoren (nicht dargestellt) auf, die in den einzelnen Förderspuren ermitteln, ob die Förderspuren mit Lebensmittelprodukten belegt sind. Dies ist wichtig, damit dann anschließend die Produktlücken in den Förderspuren mit Lebensmittelprodukten aufgefüllt werden können.

Der Hauptstrom-Förderer 13 ist unter dem Puffer-Förderer 12 angeordnet und fördert einen Hauptstrom der Lebensmittelprodukte unter dem angehobenen Puffer-Förderer 12 hindurch.

In Förderrichtung hinter dem Hauptstrom-Förderer 13 ist der Shuttle-Förderer 14 angeordnet, wobei der Shuttle-Förderer 14 rechtwinklig zur Förderrichtung als Ganzes verschoben werden kann, wie durch den Doppelpfeil in Figur 1A angedeutet ist. Die Verschiebung des Shuttle-Förderers 14 erfolgt vorzugsweise elektromotorisch durch Elektromotoren in dem Gehäuse 19 der Fördereinrichtung 10. Hierbei ist zu erwähnen, dass der Shuttle-Förderer 14 eine größere Förderbreite aufweist als der Hauptstrom-Förderer 13 und der Ausgangs-Förderer 15. Dies ist wichtig, damit der Shuttle-Förderer 14 unabhängig von seiner Verschiebestellung quer zur Förderrichtung stets die gesamte Förderbreite abdeckt.

In Förderrichtung hinter dem Shuttle-Förderer 14 ist der Ausgangs-Förderer 15 angeordnet, der die Lebensmittelprodukte an den Eingangs-Förderer 5 des Einlegers 6 weitergibt. Wichtig ist hierbei, dass der Eingangs-Förderer 5 des Einlegers 6 getrennt steuerbare Förderspuren 7, 8 aufweist, um die Lebensmittelprodukte für die einzelnen Förderspuren 7, 8 unabhängig voneinander von dem Ausgangs-Förderer 15 der Fördereinrichtung 10 übernehmen zu können.

Der Puffer-Förderer 12 ist oberhalb des Hauptstrom-Förderers 13 angeordnet, wobei der Puffer-Förderer 12 ein Ausgangsende 20 aufweist, das wahlweise auf den Hauptstrom-Förderer 13 abgesenkt oder von dem Hauptstrom-Förderer 13 angehoben werden kann, wie noch detailliert beschrieben wird. Der Puffer-Förderer 12 ist also in Richtung des Doppelpfeils um eine Schwenkachse 21 schwenkbar, wobei der Antrieb der Schwenkbewegung über eine Antriebswelle 22 und eine Hebelkonstruktion 23 erfolgt. Die Antriebswelle 22 zum Schwenken des Puffer-Förderers 12 ragt seitlich aus dem Gehäuse 19 der Fördereinrichtung 10 heraus und wird vorzugsweise ebenfalls durch einen Elektromotor angetrieben.

Falls eine Produktlücke in einer der Förderspuren aufgefüllt werden muss, so wird der Puffer-Förderer 12 mit seinem Ausgangsende 20 auf den Hauptstrom-Förderer 13 abgesenkt, so dass ein Lebensmittelprodukt aus dem Puffer-Förderer 12 auf den Hauptstrom-Förderer 13 transferiert werden kann.

Falls dagegen keine Produktlücke aufgefüllt werden muss, so wird der Puffer-Förderer 12 mit seinem Ausgangsende 20 von dem Hauptstrom-Förderer 13 angehoben, damit der Hauptstrom der Lebensmittelprodukte auf dem Hauptstrom-Förderer nicht blockiert wird.

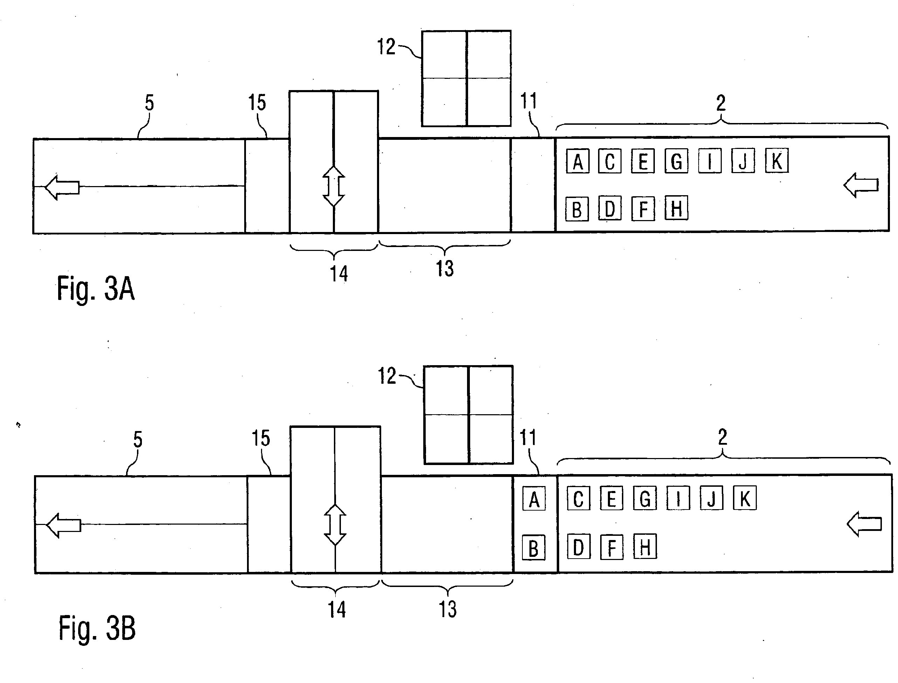

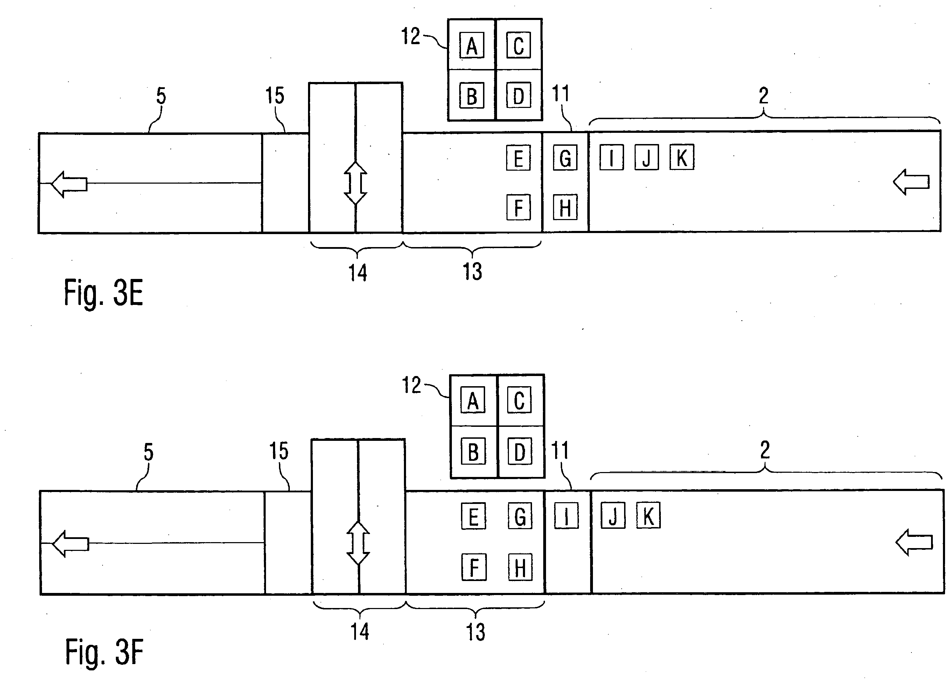

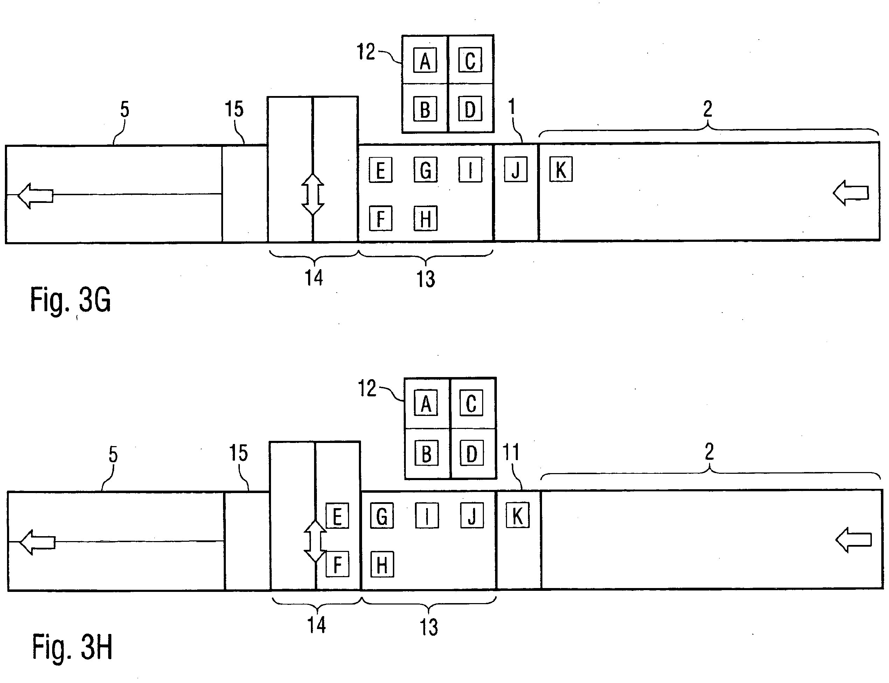

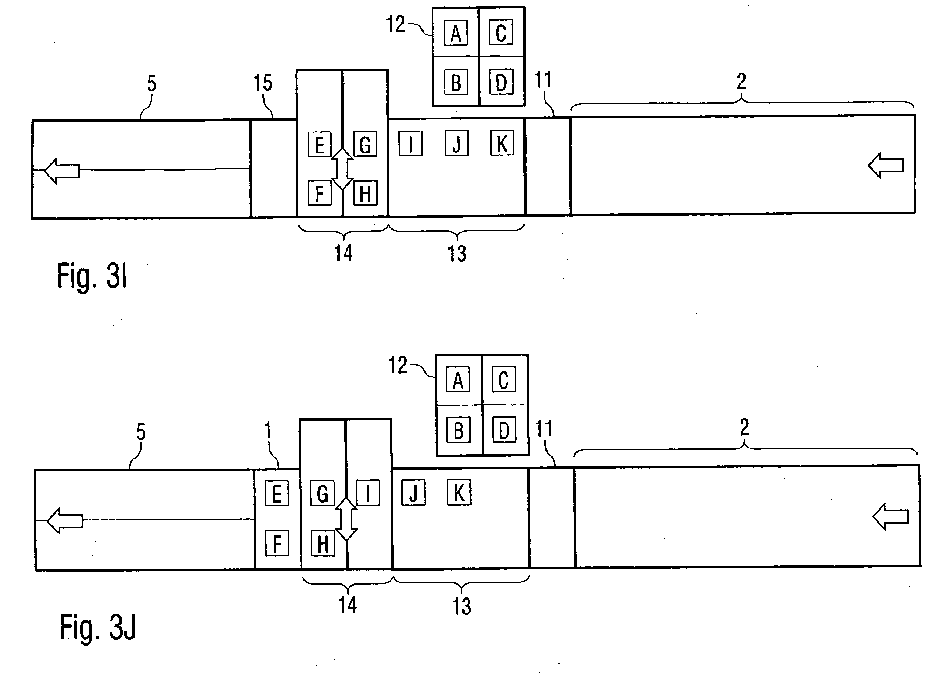

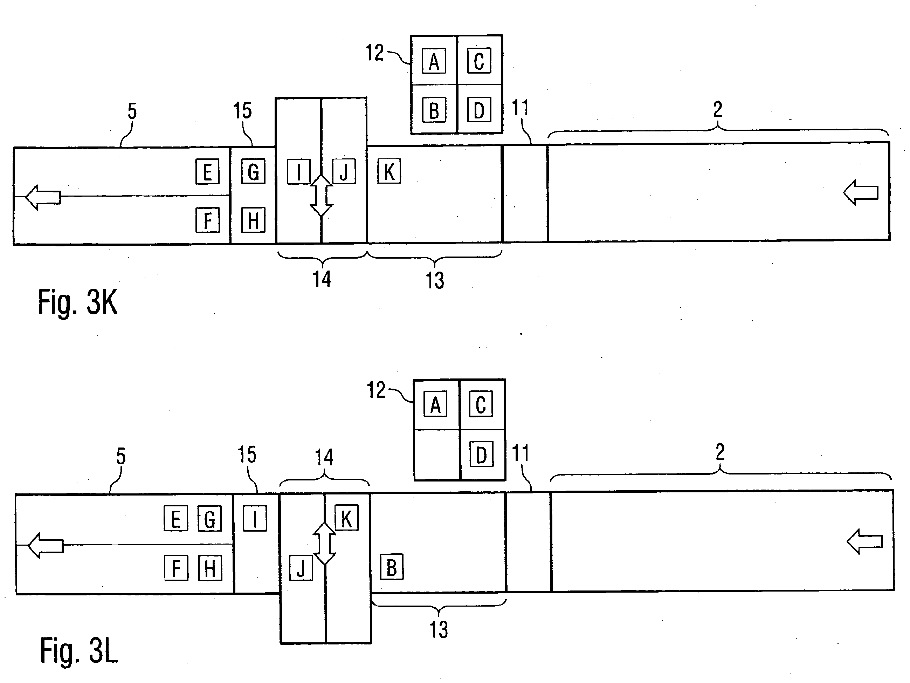

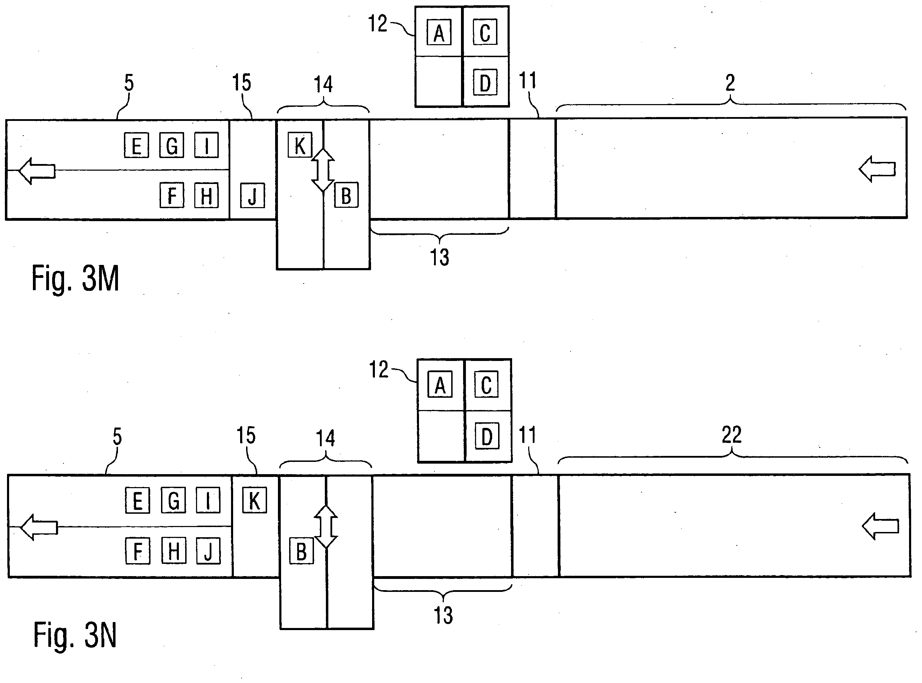

Im Folgenden wird nun unter Bezugnahme auf die Figuren 3A-3B die Funktionsweise der erfindungsgemäßen Fördereinrichtung 10 beschrieben. Die Figuren 3A bis 3B zeigen jeweils aufeinander folgende Zustände während des Betriebs der Fördereinrichtung 10.

Zur Vereinfachung ist der Puffer-Förderer 12 in den Aufsichtsdarstellungen gemäß den Figuren 3A-3B neben dem Hauptstrom-Förderer 13 dargestellt, um den Belegungszustand des Hauptstrom-Förderers 13 erkennbar zu machen. Tatsächlich befindet sich der Puffer-Förderer 12 jedoch über dem Hauptstrom-Förderer 13, wie aus den Figuren 1A-1F ersichtlich ist.

In dem Zustand gemäß Figur 3A laufen auf dem Ausgangs-Förderer 2 der Schneideinrichtung 1 Lebensmittelprodukte A-K in zwei parallelen Förderspuren ein. In der linken Förderspur befinden sich hierbei hinter dem letzten Lebensmittelprodukt H drei Produktlücken, die ihm Rahmen des erfindungsgemäßen Verfahrens aufgefüllt werden, wie nachfolgend beschrieben wird.

Figur 3B zeigt den nächsten Zustand, wobei die beiden ersten Lebensmittelprodukte A, B auf den Verteiler-Förderer 11 gelangt sind.

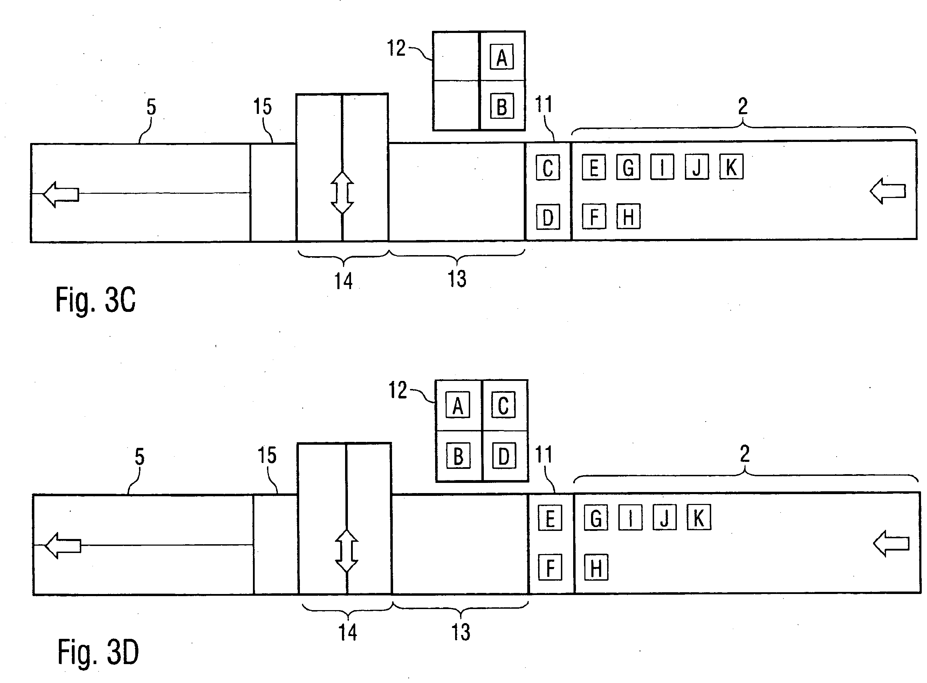

In dem nächsten Betriebszustand gemäß Figur 3C wird zunächst der Puffer-Förderer 12 aufgefüllt, indem der Verteiler-Förderer 11 die beiden Lebensmittelprodukte A, B auf den Puffer-Förderer leitet. Hierzu wird der Verteiler-Förderer 11 nach oben geschwenkt.

Auch in dem Zustand gemäß Figur 3D wird der Puffer-Förderer 12 noch aufgefüllt, so dass der Puffer-Förderer 12 dann die Lebensmittelprodukte A, B, C und D enthält.

Anschließend wird der Verteiler-Förderer 11 dann nach unten zu dem Hauptstrom-Förderer 13 geschwenkt, woraufhin dann die Lebensmittelprodukte E, F auf den Hauptstrom-Förderer 13 gefördert werden, wie in Figur 3E dargestellt ist.

In den Verfahrensschritten 3F-3H werden die Lebensmittelprodukte E-K dann bis auf den Shuttle-Förderer 14 weitergefördert, so dass sich die Lebensmittelprodukte E, F dann auf dem Shuttle-Förderer 14 befinden, wie in Figur 3H dargestellt ist.

Die Lebensmittelprodukte E-K werden dann über den Shuttle-Förderer 14 und den Ausgangs-Förderer 15 weitergefördert, wie in den Figuren 3I-3K dargestellt ist.

In dem Verfahrensschritt 3L wird der Shuttle-Förderer 14 dann in Bezug auf die Förderrichtung nach links verschoben, wodurch das Lebensmittelprodukt J von der rechten Förderspur auf die linke Förderspur transferiert wird.

Darüber hinaus wird in dem Zustand gemäß Figur 3L der Puffer-Förderer 12 auf den Hauptstrom-Förderer 13 abgesenkt, woraufhin dann das Lebensmittelprodukt B aus der linken Förderspur des Puffer-Förderers 12 in die linke Förderspur des Hauptstrom-Förderers 13 transferiert wird.

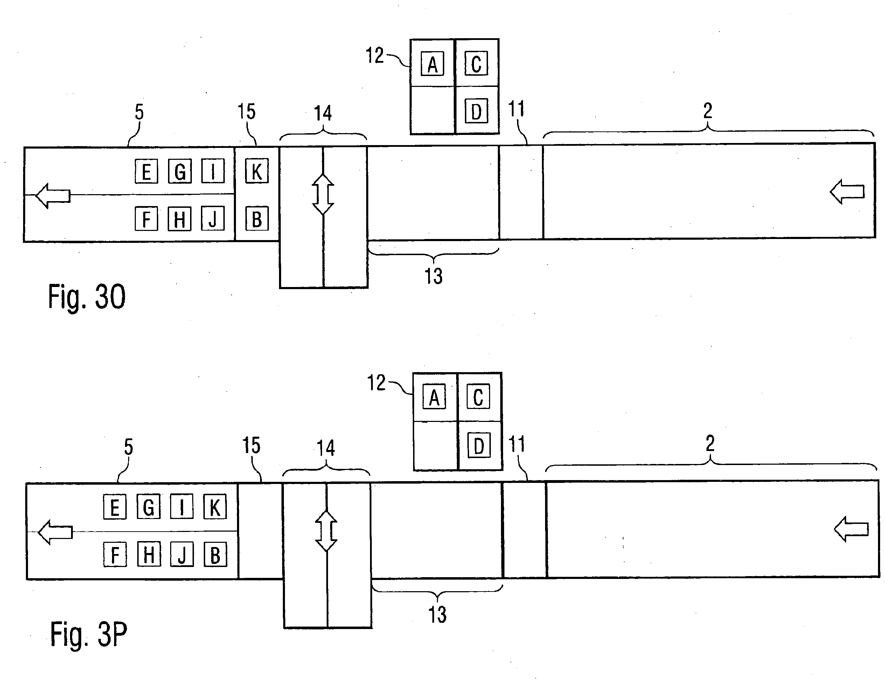

Anschließend werden die Lebensmittelprodukte J, K und B dann über den Shuttle-Förderer 14 weitergefördert, und das Lebensmittelprodukt B auf dem Shuttle-Förderer 14 füllt dann die letzte Produktlücke neben dem Lebensmittelprodukt K auf dem Ausgangs-Förderer 15 auf, wie in Figur 3O dargestellt ist.

Figur 3P zeigt den letzten Schritt, in dem die Lebensmittelprodukte auf dem Eingangs-Förderer 5 des Einlegers 6 in einem geeigneten Produktformat für den Einleger 6 angeordnet sind. In diesem Produktformat sind beide Produktspuren jeweils mit zwei nebeneinander liegenden Lebensmittelprodukten E-F, G-H, I-J bzw. K-B befüllt.

### Bezugszeichenliste

- A-K: Lebensmittelprodukte
- 1: Schneideinrichtung
- 2: Ausgangs-Förderer der Schneideinrichtung
- 3: Rechte Förderspur des Ausgangs-Förderers der Schneideinrichtung
- 4: Linke Förderspur des Ausgangs-Förderers der Schneideinrichtung
- 5: Eingangs-Förderer des Einlegers
- 6: Einleger
- 7: Rechte Förderspur des Eingangs-Förderers des Einlegers
- 8: Linke Förderspur des Eingangs-Förderers des Einlegers
- 9: Produktlücken
- 10: Fördereinrichtung
- 11: Verteiler-Förderer
- 12: Puffer-Förderer
- 13: Hauptstrom-Förderer
- 14: Shuttle-Förderer
- 15: Ausgangs-Förderer
- 16: Ausgangsende des Verteiler-Förderers
- 17: Schwenkachse des Verteiler-Förderers
- 18: Antriebswelle zum Schwenken des Verteiler-Förderers
- 19: Gehäuse
- 20: Ausgangsende des Puffer-Förderers
- 21: Schwenkachse des Puffer-Förderers
- 22: Antriebswelle zum Schwenken des Puffer-Förderers
- 23: Hebelkonstruktion zum Schwenken des Puffer-Förderers

## Patentansprüche

1. Verfahren zur Produktformatierung von Lebensmittelprodukten (A-K) auf einer Fördereinrichtung (10), wobei die Lebensmittelprodukte (A-K) in mehreren parallelen Förderspuren (3, 4, 7, 8) einlaufen, mit den folgenden Schritten:
a) Aufnahme der Lebensmittelprodukte (A-K) in mehreren parallelen Förderspuren (3, 4), die teilweise Produktlücken (9) enthalten, und
b) Ausgabe der Lebensmittelprodukte (A-K) in den parallelen Förderspuren (7, 8) in einem bestimmten Produktformat,
**gekennzeichnet durch** folgende Schritte:
c) Erfassen der Produktbelegung auf den eingangsseitig einlaufenden Förderspuren (3, 4, 7, 8,) individuell für jede der Förderspuren (3, 4, 7, 8,) und
d) Auffüllen- der Produktlücken (9) in den Förderspuren (3, 4, 7, 8) durch Lebensmittelprodukte (A-K), so dass ausgangsseitig alle parallelen Förderspuren (3, 4, 7, 8) mit den Lebensmittelprodukten (A-K) ohne Produktlücke belegt sind, wobei nur bei einer ungradzahligen Anzahl von Produktlücken (9) in einer der Förderspuren (3, 4, 7, 8) die Produktlücken (9) auch aus einem Produktpuffer (12) mit Lebensmittelprodukten (A-K) aufgefüllt werden, indem mindestens eines der Lebensmittelprodukte (A-K) aus dem Produktpuffer (12) in die Förderspur transferiert wird.

2. Verfahren nach Anspruch 1, **gekennzeichnet durch** folgenden Schritt:
Erfassung der Produktbelegung auf den eingangsseitig einlaufenden Förderspuren (3, 4, 7, 8) individuell für jede der Förderspuren (3, 4, 7, 8).

3. Verfahren nach Anspruch 2, **gekennzeichnet durch** folgende Schritte:
a) Steuern des Produkttransfers von dem Produktpuffer (12) in die Förderspuren (3, 4, 7, 8) in Abhängigkeit von der eingangsseitig erfassten Produktbelegung auf den einzelnen Förderspuren (3, 4, 7, 8), und/oder
b) Steuern des Produkttransfers zwischen den Förderspuren (3, 4, 7, 8) in Abhängigkeit von der eingangsseitig erfassten Produktbelegung auf den einzelnen Förderspuren (3, 4, 7, 8).

4. Verfahren nach einem der Ansprüche 1 bis 3, **gekennzeichnet durch** folgenden Schritt:
Verteilen der eingangsseitig einlaufenden Lebensmittelprodukte (A-K) wahlweise auf den Produktpuffer (12) oder auf einen Hauptstrom der Lebensmittelprodukte (A-K), der zum Ausgang durchläuft, wobei vorzugsweise zunächst der Produktpuffer (12) befüllt wird.

5. Verfahren nach Anspruch 4, **gekennzeichnet durch** folgende Schritte:
a) Erfassen der dem Produktpuffer (12) zugeführten Lebensmittelprodukte (A-K),
b) Erfassen der aus dem Produktpuffer (12) abgeführten Lebensmittelprodukte (A-K),
c) Ermitteln des Befüllungszustands des Produktpuffers (12) aus den zugeführten Lebensmittelprodukten (A-K) und den abgeführten Lebensmittelprodukten (A-K), und
d) Steuern der Verteilung der eingangsseitig einlaufenden Lebensmittelprodukte (A-K) auf den Produktpuffer (12) oder auf den Hauptstrom in Abhängigkeit von dem Befüllungszustand des Produktpuffers (12).

## Claims

1. A method for formatting food products (A-K) on a conveyor device (10), wherein the food products (A-K) enter in a plurality of parallel conveyor tracks (3, 4, 7, 8), with the following steps:
a) receiving the food products (A-K) in a plurality of parallel conveyor tracks (3, 4), some of which include product gaps (9);
b) outputting the food products (A-K) into the parallel conveyor tracks (7, 8) in a specifie product format; and
**characterized by** the following steps:
c) detecting the product supply in the conveyor tracks (3, 4, 7, 8) incoming on the input side individually for each of the conveyor tracks (3, 4, 7, 8), and
d) filling the product gaps (9) in the conveyor tracks (3, 4, 7, 8) with food products (A-K), so that on the output side all of the parallel conveyor tracks (3, 4, 7, 8) are supplied with the food products (A-K), wherein only when an odd number of product gaps (9) exist in one of the conveyor tracks (3, 4, 7, 8), the product gaps (9) are also filled with food products (A-K) from a product buffer (12) in that at least one of the food products (A-K) is transferred from the product buffer (12) to the conveyor track.

2. The method in accordance with claim 1, **characterized by** the following step: detecting the product supply in the conveyor tracks (3, 4, 7, 8) incoming on the input side individually for each of the conveyor tracks (3, 4, 7, 8).

3. The method in accordance with claim 2, **characterized by** the following steps:
a) controlling the product transfer from the product buffer (12) to the conveyor tracks (3, 4, 7, 8) as a function of the product supply detected on the input side in the individual conveyor tracks (3, 4, 7, 8), and/or
b) controlling the product transfer between the conveyor tracks (3, 4, 7, 8) as a function of the product supply detected on the input side in the individual conveyor tracks (3, 4, 7, 8).

4. The method in accordance with any of claims 1 to 3,
**characterized by** the following step:
selectively distributing the food products (A-K) incoming on the input side to the product buffer (12) or to a main flow of the food products (A-K), which main flow passes through to the output, wherein preferably the product buffer (12) is supplied first.

5. The method in accordance with claim 4, **characterized by** the following steps:
a) detecting the food products (A-K) added to the product buffer (12);
b) detecting the food products (A-K) removed from the product buffer (12);
c) determining a filling status of the product buffer (12) from the added food products (A-K) and from the removed food products (A-K); and
d) controlling distribution of the food products (A-K) incoming on the input side to the product buffer (12) or to the main flow as a function of the filling status of the product buffer (12).

## Revendications

1. Procédé servant à formater des produits alimentaires (A-K) sur un dispositif de transport (10), dans lequel les produits alimentaires (A-K) arrivent sur plusieurs lignes de transport (3, 4, 7, 8) parallèles, comprenant les étapes qui suivent consistant à :
a) recevoir les produits alimentaires (A-K) sur plusieurs lignes de transport (3, 4) parallèles, qui contiennent en partie des interstices entre les produits (9), et
b) fournir les produits alimentaires (A-K) sur les lignes de transport (7, 8) parallèles dans un format de produit défini,
**caractérisé par** les étapes qui suivent consistant à :
c) détecter 1'occupation par les produits des lignes de transport (3, 4, 7, 8) arrivant côté entrée individuellement pour chacune des lignes de transport (3, 4, 7, 8), et
d) remplir les interstices entre les produits (9) des lignes de transport (3, 4, 7, 8) par des produits alimentaires (A-K) de sorte que côté sortie toutes les lignes de transport (3, 4, 7, 8) parallèles soient occup6es sans interstices entre les produits par les produits alimentaires (A-K), dans lequel seulement dans le cas d'un nombre impair d'interstices entre les produits (9) sur une des lignes de transport (3, 4, 7, 8), les interstices entre les produits (9) sont remplis depuis également un tampon de produit (12) avec des produits alimentaires (A-K) par le fait qu'au moins un des produits alimentaires (A-K) est transféré depuis le tampon de produit (12) sur la ligne de transport.

2. Procédé selon la revendication 1, **caractérisé par** l'étape qui suit consistant à :
détecter 1'occupation par les produits des lignes de transport (3, 4, 7, 8) arrivant côté entrée individuellement pour chacune des lignes de transport (3, 4, 7, 8).

3. Procédé selon la revendication 2, **caractérisé par** les étapes qui suivent consistant à :
a) commander le transfert de produit depuis le tampon de produit (12) sur les lignes de transport (3, 4, 7, 8) en fonction de l'occupation, détectée côté entrée, par les produits des diverses lignes de transport (3, 4, 7, 8), et/ou
b) commander le transfert de produit entre les lignes de transport (3, 4, 7, 8) en fonction de l'occupation, détectée côté entrée, par les produits des diverses lignes de transport (3, 4, 7, 8).

4. Procédé selon l'une quelconque des revendications 1 à 3, **caractérisé par** l'étape qui suit consistant à .
répartir les produits alimentaires (A-K) arrivant côté entrée au choix sur le tampon de produit (12) ou sur un flux principal des produits alimentaires (A-K), qui circule en direction de la sortie, dans lequel de préférence dans un premier temps le tampon de produit (12) est rempli.

5. Procédé selon la revendication 4, **caractérisé par** les étapes qui suivent consistant à :
a) détecter les produits alimentaires (A-K) amenés au tampon de produit (12) ;
b) détecter les produits alimentaires (A-K) évacués hors du tampon de produit (12) ;
c) déterminer l'état de remplissage du tampon de produit (12) à partir des produits alimentaires (A-K) amenés et des produits alimentaires (A-K) évacués ; et
d) commander la répartition des produits alimentaires (A-K) arrivant côté entrée sur le tampon de produit (12) ou sur le flux principal en fonction de l'état de remplissage du tampon de produit (12).
